(19) Europäisches Patentamt
European Patent Office
Office européen des brevets

(11) **EP 4 659 932 A1**

(12) **EUROPEAN PATENT APPLICATION**
published in accordance with Art. 153(4) EPC

(43) Date of publication:
**10.12.2025 Bulletin 2025/50**

(21) Application number: 24749988.2

(22) Date of filing: **19.01.2024**

(51) International Patent Classification (IPC):
**B29C 45/14** (2006.01)     **B29C 70/12** (2006.01)
**B29C 70/16** (2006.01)

(52) Cooperative Patent Classification (CPC):
**B29C 45/14; B29C 70/12; B29C 70/16**

(86) International application number:
**PCT/JP2024/001416**

(87) International publication number:
**WO 2024/162035 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.01.2023 JP 2023012532**

(71) Applicant: **Toray Industries, Inc.
Tokyo 103-8666 (JP)**

(72) Inventors:
• **ONODERA Miho
Iyo-gun, Ehime 791-3193 (JP)**
• **HAMAGUCHI Mitsushige
Nagoya-shi, Aichi 455-8502 (JP)**
• **HONMA Masato
Iyo-gun, Ehime 791-3193 (JP)**

(74) Representative: **Mewburn Ellis LLP
Aurora Building
Counterslip
Bristol BS1 6BX (GB)**

(54) **INTEGRALLY-MOLDED PRODUCT AND METHOD FOR MANUFACTURING INTEGRALLY-MOLDED PRODUCT**

(57) An integrated molded part of a structural member and a resin structural member in which deformation of the structural member that may occur during integral molding is suppressed and which has high accuracy in weight and dimensions is realized. An integrated molded part including a structural member (a), a resin structural member (b), and a protective member (c), wherein the protective member (c) is in contact with both the structural member (a) and the resin structural member (b), and a softening temperature Tb (°C) of the resin structural member (b) and a softening temperature Tc (°C) of the protective member (c) satisfy the following relationship.

$$Tc > Tb$$

EP 4 659 932 A1

**(Cont. next page)**

Figure 4

**Description**

TECHNICAL FIELD

The present invention relates to an integrated molded part and a method for manufacturing the same.

BACKGROUND ART

Fiber-reinforced resins are materials superior in mechanical properties and a lightweight property, and are widely used as structural members of aircraft, automobiles, industrial equipment, and the like. In such applications, a frame structure including a pipe made of a fiber-reinforced resin as a primary structure may be adopted. In this case, it is necessary to form a member that can be connected to, or attached to and detached from a portion of a frame material made of a fiber-reinforced resin, but since such a member has a relatively complicated shape, it has been common to separately manufacture the member by injection molding or the like and fix the member to the frame material using a bolt-rivet or an adhesive. For example, Patent Document 1 discloses a frame structure in which a pipe made of a carbon fiber-reinforced resin and a joint are joined using an adhesive and a rivet. In addition, Patent Document 2 discloses a frame structure including a joint and a pipe joined together by mating the joint into a pipe inner bore and making an adhesive flow into a gap formed between a pipe inner bore surface and a joint mating portion surface.

PRIOR ART DOCUMENTS

PATENT DOCUMENTS

Patent Document 1: JP S62-295372 A
Patent Document 2: JP 2020-101288 A

SUMMARY OF THE INVENTION

PROBLEMS TO BE SOLVED BY THE INVENTION

To ensure the reliability of joint using an adhesive, it is common to apply a relatively large amount of adhesive and remove an excessive adhesive overflowing after curing. However, the burden of the work of removing the adhesive is large, and this is particularly a problem in mass production. In addition, in the removal work by grinding or the like, the surface of the member may be damaged. Thus, there is also a method of forming another resin structural member on the surface of a structural member by injection molding, but the structural member itself may be deformed by transfer of the heat of the resin injected. When the structural member itself is deformed, not only mechanical properties are deteriorated, but also a resin flows into the deformed portion, which causes a problem of an increase in weight of the molded part.

An object of the present invention is to obtain an integrated molded part of a structural member and a resin structural member, in which deformation of the structural member that may occur during integral molding is suppressed.

SOLUTIONS TO THE PROBLEMS

The present invention for solving the above-described problems includes the following aspects.

(1) An integrated molded part including a structural member (a), a resin structural member (b), and a protective member (c), wherein

the protective member (c) is in contact with both the structural member (a) and the resin structural member (b), and
a softening temperature Tb (°C) of the resin structural member (b) and a softening temperature Tc (°C) of the protective member (c) satisfy the following relationship.

$$Tc>Tb$$

(2) The integrated molded part according to (1), wherein a glass transition temperature Ta (°C) of the structural member (a) and the softening temperature Tc (°C) of the protective member (c) satisfy the following relationship.

$$Tc > Ta$$

(3) The integrated molded part according to (2), wherein a glass transition temperature Ta (°C) of the structural member (a), a softening temperature Tb (°C) of the resin structural member (b), and a softening temperature Tc (°C) of the protective member (c) satisfy the following relationship.

$$10 < Tc - Ta < 180$$

$$5 < Tc - Tb < 80$$

(4) The integrated molded part according to (1), wherein the structural member (a) is a structural member having an internal space, and the structural member (a) and the resin structural member (b) are joined in contact with each other at least at a part thereof.

(5) The integrated molded part according to (1), wherein the structural member (a) is a structural member having an open internal space, and the protective member (c) covers at least a part of an opening section of the structural member (a).

(6) The integrated molded part according to (1), wherein the structural member (a) is a structural member having an open hollow columnar section, and the hollow columnar section of the structural member (a) and the resin structural member (b) are joined in contact with each other on at least a part of an outer wall or an inner wall of the hollow columnar section.

(7) The integrated molded part according to (6), wherein the hollow columnar section of the structural member (a) and the resin structural member (b) are joined on at least a part of an outer wall or an inner wall of the hollow columnar section with a thermoplastic resin interposed therebetween.

(8) The integrated molded part according to (6), wherein

the structural member (a) is essentially made of a carbon fiber-reinforced thermosetting resin,
a thermoplastic resin layer is disposed on at least a part of an outer wall or an inner wall of the structural member (a), the resin structural member (b) is an injection molded article, the structural member (a) and the resin structural member (b) are joined with the thermoplastic resin layer of the structural member (a) interposed therebetween, and at least a part of an opening section of the structural member (a) is covered with a protective member (c).

(9) The integrated molded part according to (8), wherein the resin structural member (b) is made of a carbon fiber-reinforced thermoplastic resin, and the protective member (c) is made of a material having a linear expansion coefficient larger than a linear expansion coefficient of a material constituting the structural member (a).

(10) The integrated molded part according to (8), wherein the resin structural member (b) is made of a carbon fiber-reinforced thermoplastic resin, and the protective member (c) is made of a carbon fiber-reinforced thermoplastic resin or a metal.

(11) The integrated molded part according to (8), wherein the resin structural member (b) is made of a carbon fiber-reinforced thermoplastic resin, the protective member (c) is made of a carbon fiber-reinforced thermoplastic resin having a softening temperature (°C) higher than a melting point (°C) of the resin structural member (b), and the protective member (c) is present between an internal space of the structural member (a) and the resin structural member (b).

(12) The integrated molded part according to (6), wherein at least a part of the protective member (c) has a size equal to or larger than an inner diameter of the hollow columnar section of the structural member (a).

(13) The integrated molded part according to (6), wherein a distance between a boundary between an internal space of the hollow columnar section of the structural member (a) and the protective member (c) and an end of the structural member (a) is 0 to 50 mm.

(14) The integrated molded part according to (1), wherein a thickness of the protective member (c) is 0.4 to 10 mm.

(15) The integrated molded part according to (6), wherein a blockage ratio by the protective member (c) to an opening section area of the structural member (a) is 40 to 100%.

(16) The integrated molded part according to (6), wherein an area (L1) of a region where the structural member (a) and the protective member (c) are in contact with each other is 50 to 200% of a joint area (L2) between the structural member (a) and the resin structural member (b).

(17) The integrated molded part according to (1), wherein the protective member (c) is essentially made of a thermoplastic resin, and a difference in Hansen solubility parameter (HSP value) between the resin structural member (b) and the protective member (c) is 0 to 2 $(J/cm^3)^{1/2}$.

(18) The integrated molded part according to (6), wherein the structural member (a) is a pipe, and the resin structural member (b) is a joint or a pedestal.

(19) A frame structure including the integrated molded part according to (18).

(20) An aerial vehicle including the integrated molded part according to (18).

(21) The aerial vehicle according to (20), wherein the structural member (a) has a length of 0.05 m or more and 3 m or less.

(22) The aerial vehicle according to (20), wherein the aerial vehicle has a body weight of 1000 kg or less.

(23) The aerial vehicle according to (20), which is a multirotor type equipped with three or more rotor blades.

(24) A method for manufacturing an integrated molded part, the method including joining a resin structural member (b) to a structural member (a) including a hollow columnar section, the hollow columnar section having an opening section at at least one end and essentially made of a fiber-reinforced resin, such that the resin structural member (b) is in contact with at least a part of an outer wall or an inner wall of the hollow columnar section of the structural member (a), in a state where a protective member (c) covering the open section of the hollow columnar section is disposed.

(25) The method for manufacturing an integrated molded part according to (24), wherein the structural member (a) is fixed to a cavity of an injection mold, a molten thermoplastic resin is caused to flow in contact with at least a part of an outer wall or an inner wall of the hollow columnar section of the structural member (a) in a state where a protective member (c) that covers the opening section of the hollow columnar section is disposed, and the thermoplastic resin is solidified under application of retained pressure to injection mold the resin structural member (b), and simultaneously join the resin structural member (b) to the hollow columnar section of the structural member (a).

EFFECTS OF THE INVENTION

According to the present invention, in an integrated molded part as described above, deformation of a structural member that may occur during integral molding is suppressed, and an integrated molded part having high accuracy in weight and dimensions is obtained.

BRIEF DESCRIPTION OF THE DRAWINGS

Fig. 1 is a schematic external view illustrating one example of a joint as a resin structural member (b).

Fig. 2 is a schematic external view illustrating one example of a pedestal as a resin structural member (b).

Fig. 3 is a schematic external view illustrating one example of an integrated molded part in which the joint illustrated in Fig. 1 or the pedestal illustrated in Fig. 2 is joined to a structural member (a).

Fig. 4 is a sectional view illustrating one example of a mating state of a protective member (c) in a hollow columnar section of a structural member (a).

Fig. 5 is a sectional view illustrating dimensions of a protective member (c) disposed at an end of a hollow columnar section of a structural member (a).

EMBODIMENTS OF THE INVENTION

Hereinafter, preferred embodiments of the present invention will be described with reference to the accompanying drawings.

The shape of the structural member (a) is not particularly limited, but a shape having an internal space or a shape having a hollow columnar section with at least one end opened is suitably used. The hollow columnar shape is a shape having an elongated inner bore defined by an outer wall, and the cross-sectional shape of the outer wall is not limited to circular, and the cross section may be an elliptical, polygonal, or profiled section, but is preferably circular or polygonal. The hollow columnar section may be curved in the longitudinal direction. In addition, the structural member (a) may be a member composed only of the hollow columnar section, that is, a pipe-shaped member as a whole.

The structural member (a) is preferably a member in which the hollow columnar section is essentially made of a fiber-reinforced resin, and may be a member containing no reinforcing fibers other than the hollow columnar section, or may be a member already joined to another member made or not made of a fiber-reinforced resin. The structural member (a) is more preferably a member entirely essentially made of a fiber-reinforced resin. Here, the phrase "essentially made of a fiber-reinforced resin" means that while most of the item is made of a resin containing reinforcing fibers, the item may partially have a portion not containing reinforcing fibers. For example, in an aspect in which a thermoplastic resin layer for joint is disposed on a surface layer of a hollow columnar section to be described later, even when the thermoplastic resin layer does not contain reinforcing fibers, the hollow columnar section is considered to be essentially made of a fiber-reinforced resin as long as a resin portion containing reinforcing fibers is dominant in the entire hollow columnar section. Typically, 80 vol% or more, preferably 90 vol% or more of the hollow columnar section is a fiber-reinforced resin.

The cross-sectional area of the hollow columnar section (a sectional area of a section perpendicular to the longitudinal direction; in the present specification, the section of the hollow columnar section hereinafter shall mean a section perpendicular to the longitudinal direction unless otherwise specified; in addition, when the hollow columnar section is curved, it shall mean a section perpendicular to a tangent line of a curve connecting the center of the inner bore) is preferably 20 mm$^2$ or more, more preferably 50 mm$^2$ or more, and preferably 300 mm$^2$ or less, more preferably 200 mm$^2$ or less. When the hollow columnar member (a) has a sectional area in the above range, a highly rigid integrated molded part can be obtained with high productivity.

The reinforcing fibers contained in the fiber-reinforced resin are not particularly limited, and examples thereof include glass fibers, polyacrylonitrile-based, rayon-based, lignin-based, pitch-based carbon fibers (including graphite fibers), potassium titanate whisker, zinc oxide whisker, calcium carbonate whisker, wollastonite whisker, aluminum borate whisker, aramid fibers, alumina fibers, silicon carbide fibers, ceramic fibers, asbestos fibers, gypsum fibers, and metal fibers. Among them, glass fibers, polyacrylonitrile-based and pitch-based carbon fibers are preferable. From the viewpoint of a lightweight property and mechanical properties, polyacrylonitrile-based or pitch-based carbon fibers are more preferable, and polyacrylonitrile-based carbon fibers are particularly preferable.

It is preferable from the viewpoint of improving the mechanical properties that the reinforcing fiber is surface-treated with a sizing agent. Examples of the sizing agent include polyfunctional epoxy resins, acrylic acid-based polymers, polyhydric alcohols, and polyethyleneimines. Specific examples of the sizing agent include polyglycidyl ethers of an aliphatic polyhydric alcohol such as glycerol triglycidyl ether, diglycerol polyglycidyl ether, polyglycerol polyglycidyl ether, sorbitol polyglycidyl ether, arabitol polyglycidyl ether, trimethylolpropane triglycidyl ether, and pentaerythritol polyglycidyl ether, polyacrylic acid, copolymers of acrylic acid and methacrylic acid, copolymers of acrylic acid and maleic acid, mixtures of two or more thereof, polyvinyl alcohol, glycerol, diglycerol, polyglycerol, sorbitol, arabitol, trimethylolpropane, pentaerythritol, and polyethyleneimine including more amino groups in one molecule. Among these sizing agents, glycerol triglycidyl ether, diglycerol polyglycidyl ether, and polyglycerol polyglycidyl ether are preferably used in the present invention because they include many highly reactive epoxy groups in one molecule, have high water solubility, and are easy to apply to the fibers.

The reinforcing fibers contained in the structural member (a) are preferably continuous fibers. Here, the continuous fiber in the present description means a fiber having a length of 10 mm or more, and as long as the fiber has this length, the fiber is not required to be a fiber continuous over the entire fiber-reinforced member, and may be divided in the middle. Examples of the form of the continuous fiber include a form in which a woven fabric composed of fiber bundles woven, and a form in which filaments, braids, filament bundles, spun yarns, and the like are aligned in one direction. The structural member (a) may be formed by using two or more forms of reinforcing fibers in combination.

The type of the resin constituting the fiber-reinforced resin is not particularly limited, but is preferably a thermosetting resin. Examples of the thermosetting resin include an unsaturated polyester resin, a vinyl ester resin, an epoxy resin, a phenol (resol type) resin, a urea melamine resin, a polyimide resin, copolymers and modified products thereof, and resins obtained by blending at least two of these. Among them, from the viewpoint of mechanical properties of the molded part, a thermosetting resin containing an epoxy resin as a main component is more preferable because of superior stiffness and strength. The main component in the thermosetting resin means that the component ratio thereof in the thermosetting resin is 60% by mass or more. The fiber-reinforced thermosetting resin may contain other fillers or additives depending on the application or the like. Examples thereof include an elastomer or a rubber component, an inorganic filler, a flame retardant, a conductivity imparting agent, an antibacterial agent, an insect repellent, a deodorant, a coloring inhibitor, a mold release agent, an antistatic agent, a plasticizer, a coloring agent, a pigment, a dye, a foaming agent, an antifoaming agent, and a coupling agent.

The thermoplastic resin constituting the resin structural member (b) is not particularly limited, and examples thereof include a polyolefin resin such as polyethylene or polypropylene, a polyester resin such as polyethylene terephthalate, polybutylene terephthalate, polyethylene naphthalate (PEN), polybutylene naphthalate (PBN), or liquid crystal polyester, polycaproamide (nylon 6), polyhexamethylene adipamide (nylon 66), polypentamethylene adipamide (nylon 56), polyhexamethylene sebacamide (nylon 610), polyhexamethylene dodecamide (nylon 612), polyundecamide (nylon 11), polydodecanamide (nylon 12), a polycaproamide/polyhexamethylene adipamide copolymer (nylon 6/66), a polycaproamide/polyhexamethylene terephthalamide copolymer (nylon 6/6T), a polyhexamethylene adipamide/polyhexamethylene terephthalamide copolymer (nylon 66/6T), a polyhexamethylene adipamide/polyhexamethylene isophthalamide copolymer (nylon 66/6I), a polyhexamethylene adipamide/polyhexamethylene isophthalamide/caproamide copolymer (nylon 66/6I/6), a polyhexamethylene terephthalamide/polyhexamethylene isophthalamide copolymer (nylon 6T/6I), a polyhexamethylene terephthalamide/polydodecanamide copolymer (nylon 6T/12), a polyhexamethylene adipamide/polyhexamethylene terephthalamide/polyhexamethylene isophthalamide copolymer (nylon 66/6T/6I), a polyhexamethylene terephthalamide/poly-2-methylpentamethylene terephthalamide copolymer (nylon 6T/M5T), a polyamide resin such as polyhexamethylene terephthalamide (nylon 9T), a polycarbonate resin, a polyphenylene sulfide (PPS) resin, a polyacetal resin or a polyoxymethylene resin, a polyimide (PI) resin, a polyamideimide (PAI) resin, a polyetherimide resin, a polysulfone resin, a polyether ketone (PEK) resin, a polyether ether ketone (PEEK) resin, a polyether ketone ketone (PEKK) resin, a polytetrafluoroethylene resin, a polyarylate (PAR) resin, and resins obtained by blending at least two of these resins. Among them, a polyolefin resin, a polyester resin, a polyamide resin, and a PPS resin are preferable.

The protective member (c) is a member that is disposed between the structural member (a) and the resin structural member (b) and plays a role of preventing deformation of the structural member (a) during integral molding and resin inflow into the internal space of the structural member (a).

The material constituting the protective member (c) is not particularly limited, but an integrated molded part in which the protective member (c) is in contact with both the structural member (a) and the resin structural member (b), and the softening temperature Tb (°C) of the resin structural member (b) and the softening temperature Tc (°C) of the protective member (c) satisfy the following relationship.

$$Tc > Tb$$

The softening temperature described herein refers to a temperature at which the target substance whose temperature has risen starts to deform. The deformation of the protective member (c) can be suppressed by satisfying the relational expression.

Examples of the material include a metal, a resin composition, and a fiber-reinforced composite material, and in particular, a carbon fiber-reinforced thermoplastic resin and a metal are preferable from the viewpoint of processability.

From the viewpoint of suppressing deformation of the structural member (a), it is preferable that the glass transition temperature Ta (°C) of the structural member (a) and the softening temperature Tc (°C) of the protective member (c) satisfy the following relationship.

$$Tc > Ta$$

For example, in an integrated molded part obtained by inserting the structural member (a) into a mold and injection molding the resin structural member (b), the protective member (c) satisfying the relational expression is disposed to be in contact with both the structural member (a) and the resin structural member (b), so that deformation can be prevented and an integrated molded part with high dimensional accuracy can be obtained.

Furthermore, when the protective member (c) is a thermoplastic resin, from the viewpoint of suppressing the deformation of the structural member (a) and the protective member (c), it is more preferable that the glass transition temperature Ta (°C) of the structural member (a), the softening temperature Tb (°C) of the resin structural member, and the softening temperature Tc (°C) of the protective member (c) satisfy the following relationship.

$$10 < Tc - Ta < 180$$

$$5 < Tc - Tb < 80$$

The glass transition temperature is measured using differential scanning calorimetry (DSC), a reversible component is separated from the total heat flow from the DSC curve observed in the second temperature raising process, and the temperature (°C) at the midpoint of the step-like signal is adopted. The softening temperature means a temperature at which the above-described thermoplastic resin starts to deform, and a compression loading method using a thermomechanical analyzer (TMA) is adopted. In the TMA curve including the relationship between temperature and displacement, the temperature (°C) at which the displacement starts to decrease is defined as a softening temperature.

The method of molding the structural member (a) is not particularly limited, and the structural member (a) can be manufactured by, for example, autoclave molding or compression molding. In particular, when the structural member (a) has a hollow columnar section, the structural member (a) can be manufactured by, for example, a method in which a prepreg or the like in which reinforcing fibers impregnated with a thermosetting resin are aligned by a filament winding method, a sheet winding method, or the like is wound around a mandrel to be formed while applying a prescribed tension, and then cured, or a method in which a prepreg or the like is formed by internal pressure molding using a forming die or compression molding and then cured. The hollow columnar section thus manufactured is made of a fiber-reinforced thermosetting resin having a layer structure. When a thermoplastic resin layer to be described later is formed on the surface layer, the structural member (a) can be manufactured by a method in which at least one layer of a film or nonwoven fabric made of a thermoplastic resin is finally wound, and then the film or nonwoven fabric is integrated with a thermosetting resin, and cured.

The resin structural member (b) is a member joined to the hollow columnar section of the structural member (a) in contact with at least a part of the outer wall or the inner wall of the hollow columnar section. It is noted that since the opening section of the hollow columnar section is sealed by the protective member (c) to be described later, the resin structural member (b) does not directly seal the opening section of the hollow columnar section. The resin structural member (b) is distinguished at least in this respect from the protective member (c).

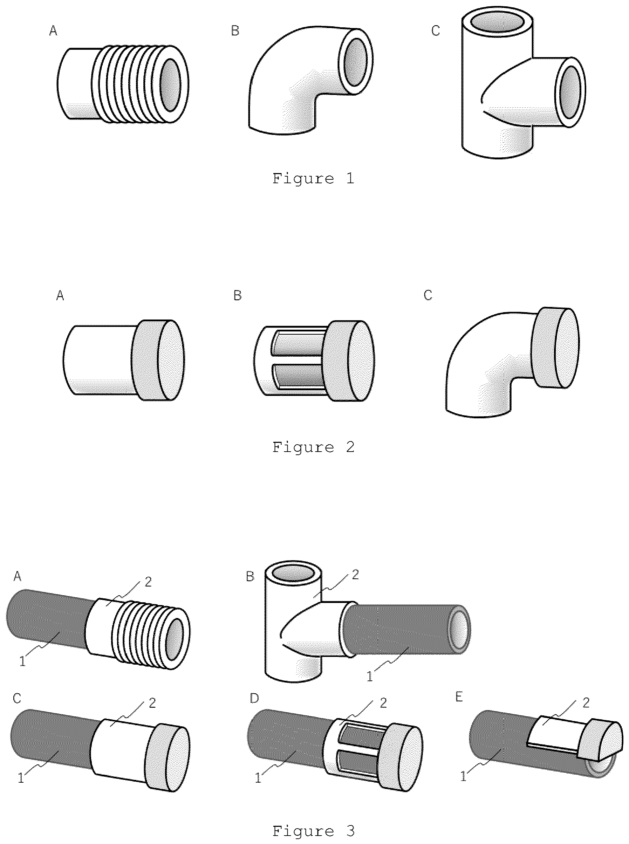

The resin structural member (b) is preferably a joint or a pedestal. Typically, the joint is a member for joining two structural members (typically, the structural members (a) described above), changing the direction of the structural members, connecting with structural members having different thicknesses, or merging or branching three or more structural members. The pedestal is a member that receives and places the structural member. Figs. 1A to 1C show representative joints, Figs. 2A to 2C show representative pedestals, and Figs. 3A to 3E show schematic external views of integrated molded parts as a part of a frame structure in which a structural member (a) (pipe) and a joint or a pedestal are integrated. Although each structure is not limited thereto, a frame structure using an integrated molded part in which the structural member (a) is a pipe and the resin structural member (b) is a joint or a pedestal is a typical aspect of the present invention.

The integrated molded part of the present invention can be suitably used as a member forming a frame structure because the resin structural member (b) capable of performing connection, joining, branching, stationary, and the like is firmly joined to the lightweight and highly rigid structural member (a). Examples of such a structure include a body and an arm of an industrial robot, bodies and arms of an automobile, a motorcycle, a bicycle, an aircraft, a helicopter, a drone, a ship, and a submersible, and a building material. In particular, from the viewpoint of stiffness and a lightweight property, it is preferably used for an aerial vehicle such as an aircraft, a helicopter, and a drone. From the viewpoint of improving the performance of the aerial vehicle, an integrated molded part in which the length of the structural member (a) is 0.05 m or more and 3 m or less is more preferable. In particular, in a relatively small aerial vehicle having a body weight of 1,000 kg or less or a multirotor type aerial vehicle equipped with three or more rotor blades, the integrated molded part of the present invention can be particularly suitably used because the influence of weight increase due to mechanical joint such as bolts and fasteners is large.

To improve mechanical properties, it is preferable that the resin structural member (b) also contains reinforcing fibers. Examples of the reinforcing fibers include the same fibers as those of the fiber-reinforced resin constituting the structural member (a) described above, and carbon fibers are preferable from the viewpoint of the lightweight property and the mechanical properties. These reinforcing fibers may be subjected to a surface treatment such as a treatment with a coupling agent, a treatment with a sizing agent, or an additive adhesion treatment.

Because a case where the resin structural member (b) is molded into a relatively complicated shape is assumed, the reinforcing fibers contained in the resin structural member (b) are preferably discontinuous reinforcing fibers from the viewpoint of molding processability. In this case, a mass average fiber length Lw of the reinforcing fibers is preferably 0.3 mm or more, and more preferably 0.8 mm or more. As the mass average fiber length is longer, the strength and stiffness are improved, and particularly the impact strength is improved.

The protective member (c) is typically disposed such that the protective member (c) covers at least a part of the opening section of the hollow columnar section of the structural member (a). More preferably, the protective member (c) is disposed at the opening section of the hollow columnar section such that the protective member (c) faces the inner bore and covers the opening section. Due to the presence of the protective member (c), it is possible to prevent mixing of resin and foreign matter into the inner bore of the hollow columnar section accompanying the joining of the resin structural member (b) to the structural member (a). More specifically, the protective member (c) prevents intrusion of an overflowing adhesive in the case of joining the resin structural member (b) with an adhesive, and intrusion of a molten resin or the like into the hollow columnar section inner bore in the case of joining the resin structural member (b) simultaneously with molding by injection molding. Therefore, stable lightweight property and quality can be obtained in the integrated molded part finally obtained.

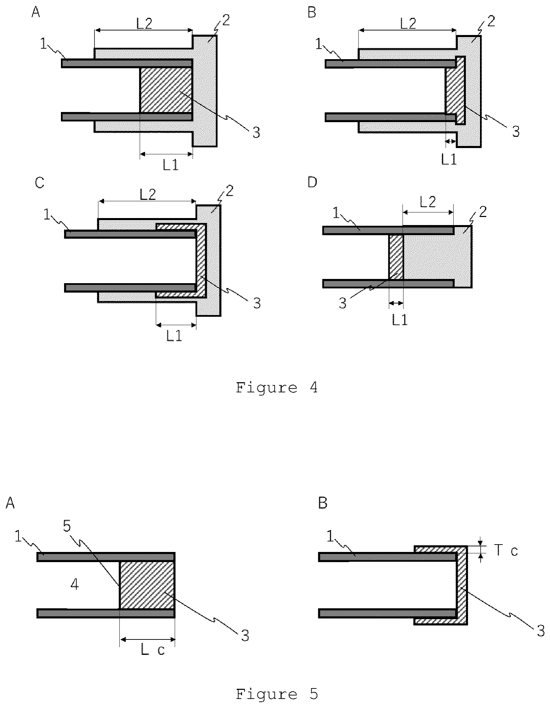

When the protective member (c) is disposed such that the protective member (c) is in contact with the end of the structural member (a), at least a part of the protective member (c) preferably has a size equal to or larger than an inner diameter of the hollow columnar section of the structural member (a). For example, with the configuration as shown in Fig. 4B or Fig. 4C, it is possible to obtain an integrated molded part in which the protective member (c) is prevented from being displaced before and after molding and resin inflow into the hollow columnar section is prevented.

From the viewpoint of achieving both the lightweight property and the dimensional accuracy of the integrated molded part, the distance (Lc) between the end of the structural member (a) and the boundary between the protective member (c) and the internal space in the hollow columnar section of the structural member (a) shown in Fig. 5A is preferably 0 to 50 mm. When the thickness (thickness Tc in the radial direction of the hollow columnar section) of the protective member (c) shown in Fig. 5B is 0.4 to 10 mm, it is possible to obtain an integrated molded part having stable weight and dimensional accuracy as the deformation of the protective member (c) is suppressed. More preferably, as shown in Fig. 4B or 4C, at least a part of the protective member (c) is mated to the hollow columnar section of the structural member (a), that is, the protective member is arranged such that the protective member is fixed with the entire circumference of at least a part of the side surface of the protective member being in contact with the entire circumference of the outer surface or the inner surface of the hollow columnar section of the structural member (a).

The protective member (c) may be one whose entire body is mated to the hollow columnar section of the structural member (a) as shown in Fig. 4A, and the blockage ratio of the protective member (c) to the opening section area of the structural member (a) is preferably 40 to 100%. When the blockage ratio is less than 40%, there is a high possibility that an adhesive or a resin flows into the internal space of the structural member (a). In such an aspect, the area of contact between the structural member (a) and the protective member (c) is preferably 50 to 200% of the joint area between the structural member (a) and the resin structural member (b). From the viewpoint of supporting the hollow columnar section of the structural member (a) in the direction from the inner surface toward the outer surface, the aforementioned area ratio is more preferably 90% or more, and when the area ratio is adjusted to 110% or less, the increase in weight of the integrated molded body can be suppressed. More specifically, in a case where the hollow columnar section of the structural member (a) has a long pipe shape as shown in Fig. 4A, where a length with which the protective member (c) is inserted into the inner bore of the structural member from the opening section surface is defined as a mating length (L1), and a maximum value of a length with which the resin structural member (b) is joined to the outer wall or the inner wall of the structural member from the opening section surface is defined as a joint length (L2), when the mating length L1 is a length equivalent to the joint length L2 as shown in Fig. 4A, an effect of preventing the adhesive and the resin from flowing into the hollow columnar section and suppressing deformation of the hollow columnar section due to joining can be obtained. Also in the integrated molded part with the resin structural member (b) having a thinned complicated shape as shown in Fig. 3D, the joint length is the length of the hollow columnar section to the joint end most distant from the opening section surface. It is noted that the protective member (c) is not limited to one that is mated to the hollow columnar section of the structural member (a), and as long as the opening section of the hollow columnar section is sealed, the protective member (c) may be one that is simply mated to the opening section end of the hollow columnar section as shown in Fig. 4B, one that is fixed in contact with the outer wall or the inner wall of the hollow columnar section as shown in Fig. 4C, or one that is simply arranged in the hollow columnar section as shown in Fig. 4D. In the aspect as shown in Fig. 4C, the joint area between the structural member (a) and the resin structural member (b) also includes a surface joined with the protective member (c) interposed therebetween.

The material constituting the protective member (c) is not particularly limited, but in a case where at least a part of the protective member (c) is mated to the hollow columnar section of the structural member (a), it is preferable that the linear expansion coefficient of the material constituting the protective member (c) is larger than the linear expansion coefficient of the material constituting the structural member (a) from the viewpoint of preventing positional displacement of the protective member (c) and suppressing deformation of the structural member (a). This effect is exerted when the protective member (c) is mated to the structural member (a), and the difference between the linear expansion coefficient of the structural member (a) and the linear expansion coefficient of the protective member (c) is preferably $2 \times 10^{-5}$ (1/°C) or more, and more preferably $5 \times 10^{-5}$ (1/°C) or more. As the difference in linear expansion coefficient increases, the protective member (c) thermally expands such that the protective member comes into contact with the inner peripheral surface of the hollow columnar section by heat transfer from a mold at the time of molding, so that the protective member (c) can be supported in the hollow columnar section by the internal pressure.

Preferably, the protective member (c) is essentially made of a thermoplastic resin. As the thermoplastic resin constituting the protective member (c) is not particularly limited, and the same resin as the thermoplastic resin constituting the resin structural member (b) can be used. In particular, from the viewpoint of the joint strength between the resin structural member (b) and the protective member (c), the difference in Hansen solubility parameter (HSP value) between the resin structural member (b) and the protective member (c) is preferably 0 to 2 $(J/cm^3)^{1/2}$. More preferably, the difference in SP value is 1 $(J/cm^3)^{1/2}$ or less, and the thermoplastic resins constituting the resin structural member (b) and the protective member (c) are preferably of the same family, and are most preferably the same resin. Here, the phrase "be of the same family" means that the resins belong to the same family, and examples thereof include a case where the resins are polyolefins, a case where the resins are polyamides, and a case where the resins are polyesters. On the other hand, the phrase "be the same resin" includes, for example, a case where the resins are polypropylene and a case where the resins are polyamide 6.

When the sealing member (c) is made of a thermoplastic resin, the softening temperature (°C) thereof is preferably higher than the melting point (°C) of the resin structural member (b) from the viewpoint of quality stability. The melting point is measured using differential scanning calorimetry (DSC). The temperature at the top of the melting peak in the obtained DSC curve is taken as the melting point (°C). The softening temperature (°C) means a temperature at which the thermoplastic resin starts to deform. For the softening temperature, a compression loading method using a thermomechanical analyzer (TMA) is adopted in the same manner as the above-described method.

In the present invention, it is also preferable that a thermoplastic resin layer is disposed on at least a part of an outer wall or an inner wall of the hollow columnar section of the structural member (a), and the resin structural member (b) is joined to the structural member (a) with the thermoplastic resin layer interposed therebetween. The thickness of such a thermoplastic resin layer is usually 1 to 300 $\mu$m, and more preferably 50 to 150 $\mu$m. The form of the thermoplastic resin region is not particularly limited as long as a region where the thermoplastic resin is exposed is formed on the surface of the structural member (a), and examples thereof include a layered shape, a spot shape, a mesh shape, and a lattice shape.

As the thermoplastic resin to be used for such a thermoplastic resin layer, a resin selected from among the same choices as those of the thermoplastic resin constituting the above-described resin structural member (b) can be used, but a polyester resin, a polyamide resin, a polyphenylene sulfide resin, a polyimide resin, a polyamideimide resin, a polyetherketone resin, a polyetheretherketone resin, a polyetherketoneketone resin, a polyarylate resin, and the like are preferable.

EP 4 659 932 A1

In addition, at the joint portion between the structural member (a) and the resin structural member (b), a part of the fibers contained in the structural member (a) is preferably in contact with the thermoplastic resin layer disposed on at least a part of the outer wall or the inner wall of the structural member (a) or the thermoplastic resin of the resin structural member (b). By forming such a joint structure, a stronger joint state can be formed due to the fiber reinforcing effect. This structure can be obtained, for example, by injecting and integrating the resin material of a resin structural member (b) to a structural member (a) obtained by grinding the surface layer of a structural member (a) made of a thermosetting fiber-reinforced resin to expose fibers, and then, disposing a thermoplastic resin film on the exposed portion and press-molding them again, or to a structural member (a) obtained by molding, at a desired temperature and desired pressing conditions, a base material of a structural member (a) composed of a thermosetting resin prepreg laminate and a thermoplastic resin film laminated thereof.

The integrated molded part of the present invention can be manufactured by joining the resin structural member (b) in contact with at least a part of an outer wall or an inner wall of the hollow columnar section of the structural member (a), in a state where a protective member (c) is disposed on the opening section of the hollow columnar section of the structural member (a). The method for joining the resin structural member (b) is not particularly limited, and for example, the structural member (b) separately molded can be joined to the hollow columnar section with an adhesive or the like. Particularly preferably, the method is one in which the resin structural member (b) is molded by injection molding, that is, insert molding or outsert molding, and at the same time, the resin structural member (b) is joined to the structural member (b). In this case, the effect of the present invention is particularly remarkable. More specifically, it is preferable to manufacture an integrated molded part by fixing a structural member (a) to a cavity of an injection mold, causing a molten thermoplastic resin to flow in contact with at least a part of an outer wall or an inner wall of a hollow columnar section of the structural member (a) in a state where a protective member (c) for sealing the opening section of the hollow columnar section is disposed, solidifying the thermoplastic resin to injection mold a resin structural member (b), and joining the resin structural member (b) to the hollow columnar section of the structural member (a).

EXAMPLES

Hereinafter, the present invention will be described more specifically with reference to Examples. The present invention is not limited by the description of Examples. The integrated molded parts obtained were evaluated using the methods described below.

[Coefficient of variation of weight]

The weight of each of integrated molded parts (n = 5) was measured, the standard deviation (g) and the average weight (g) were determined, and the coefficient of variation in weight was calculated using the following formula.

Coefficient of variation (%) = 100 $\times$ standard deviation (g)/average weight (g)

[Internal structure after molding]

For integrated molded parts (n = 5), X-ray observation was performed on the joint portion between the structural member (a) and the resin structural member (b) and the protective member (c) as observation targets. After each integrated molded part was cut such that only the observation target portions were left, a two-dimensional transmission image was photographed with an X-ray inspection apparatus (fluoroscopy) and the inside of the integrated molded part was observed. From the observation image, the inflow state of the resin into the hollow columnar section and the presence or absence of deformation of the structural member (a) and the protective member (c) were evaluated.

[Joint state]

For each of integrated molded parts (n = 5), a drop test was performed in which the resin structural member (b) was dropped from a height of 1.5 m in the downward direction. The joint state between the structural member (a) and the resin structural member (b) at that time was visually observed and the X-ray fluoroscopic imaging described above was performed again, and the presence or absence of cracks in the joint portion between the structural member (a) and the resin structural member (b) and the joint portion between the resin structural member (b) and the protective member (c) was evaluated.

(Example 1)

On a release-treated stainless mandrel having a tip outer diameter of 30 mm and a length of 700 mm, "TORAYCA Prepreg" P3051S-30 and P3052S-12 manufactured by Toray Industries, Inc. were laminated such that the fiber-reinforced resin P3051S-30 was placed at a material angle of 0 degrees and the fiber-reinforced resin P3052S-12 was placed at a material angle of 60 degrees where the longitudinal direction of the mandrel was defined as the 0 degrees axis. Further, a 70 $\mu$m-thick polyamide film obtained by hot-pressing pellets of a copolymer polyamide resin (CM4000 manufactured by Toray Industries, Inc., polyamide 6/66/610, melting point: 150°C) was wound around the outer side of the laminate by one turn, a wrapping tape (heat-resistant film tape, width 10 mm) was wound around the laminate at a tension of 3 kg, and the laminate was heat-molded for 30 minutes in a curing furnace at 150°C. Thereafter, the mandrel was removed, the wrapping tape was removed, and the resulting product was cut, whereby a pipe (structural member (a)) having a thickness of 0.5 mm and a length of 500 mm was obtained. Next, a resin block (protective member (c)) having an outer diameter of 30 mm and a thickness of 30 mm obtained by injection molding polyamide 66 resin (Amilan CM3001N manufactured by Toray Industries, Inc.) pellets was fitted into the pipe to seal the opening section of the pipe, and it was confirmed that the pipe opening section end surface coincided with the end surface of the resin block. Thereafter, the outer periphery of the pipe was clamped by a jig provided outside the injection molding mold, the pipe opening section surface was adjusted to a desired position in the cavity, and then the pipe was inserted into the injection molding mold. Using an injection molding machine (J 350EIII manufactured by The Japan Steel Works, Ltd.) set at a cylinder temperature of 280°C and a mold temperature of 80°C, long fiber pellets (TLP1060) manufactured by Toray Industries, Inc. were injection molded, whereby a pedestal (resin structural member (b)) having a shape illustrated in Fig. 2A was formed such that the inner surface of the pedestal was in contact with a region 30 mm from an end of the outer peripheral surface of the pipe, and an integrated molded part having a shape illustrated in Fig. 3C was manufactured.

The coefficient of variation in weight of the integrated molded parts obtained (n = 5) was stable at 0.9%. In addition, the inflow of the injected resin into the pipe was not confirmed from the X-ray transmission image, and deformation of the pipe and the resin block was not confirmed as well. In addition, as a result of performing a drop test in which these pipes were dropped from a height of 1.5 m such that the joint was positioned downward, and thereafter, the joint state between the pipe and the joint was checked, no change was observed in the joint portion in all the five pipes, and a good joint state was maintained.

(Example 2)

A pipe (structural member (a)) was produced in the same manner as in Example 1. Next, a resin plate (protective member (c)) having an outer diameter of 32 mm and a thickness of 3 mm obtained by injection molding polyamide 66 resin (Amilan CM3001N manufactured by Toray Industries, Inc.) pellets was disposed to face the pipe opening section surface, and then the resin plate near the outer edge of the pipe was heated and melted with a soldering iron heated to 300°C, and the resin plate was fixed to the pipe to seal the opening section of the pipe. Thereafter, the outer periphery of the pipe was clamped by a jig provided outside the injection molding mold, the outermost surface of the resin plate fixed to the pipe opening section surface was adjusted to a desired position in the cavity, and then the pipe was inserted into the injection molding mold. Using an injection molding machine (J 350EIII manufactured by The Japan Steel Works, Ltd.) set at a cylinder temperature of 280°C and a mold temperature of 80°C, long fiber pellets (TLP1060) manufactured by Toray Industries, Inc. were injection molded, whereby a pedestal (resin structural member (b)) having a shape illustrated in Fig. 2A was formed such that the inner surface of the pedestal was in contact with a region 30 mm from an end of the outer peripheral surface of the pipe, and an integrated molded part having a shape illustrated in Fig. 3C was manufactured.

The coefficient of variation in weight of the integrated molded parts obtained (n = 5) was 5.6%, and the variation was larger than that in Example 1. In addition, although the inflow of the injected resin into the pipe was not confirmed from the X-ray transmission image, the resin plate used as the protective member was bent in all the samples. However, no gap was found between the protective member and the resin structural member (joint). Further, slight deformation was also found in the hollow columnar section of the structural member. In addition, as a result of performing a drop test in which these pipes were dropped from a height of 1.5 m such that the joint was positioned downward, and thereafter, the joint state between the pipe and the joint was checked, no change was observed in the joint portion in all the five pipes, and a good joint state was maintained.

(Example 3)

A pipe (structural member (a)) was obtained in the same manner as in Example 1. Next, an aluminum block (protective member (c)) having an outer form of 30 mm and a thickness of 30 mm obtained by turning aluminum alloy was fitted into the pipe to seal the opening section of the pipe, and it was confirmed that the pipe opening section end surface coincided with the end surface of the aluminum block. Thereafter, the outer periphery of the pipe was clamped by a jig provided outside the injection molding mold, the pipe opening section surface was adjusted to a desired position in the cavity, and then the pipe was inserted into the injection molding mold. Using an injection molding machine (J 350EIII manufactured by The Japan Steel Works, Ltd.) set at a cylinder temperature of 280°C and a mold temperature of 80°C, long fiber pellets (TLP1060) manufactured by Toray Industries, Inc. were injection molded, whereby a pedestal (resin structural member (b)) having a shape illustrated in Fig. 2A was formed such that the inner surface of the pedestal was in contact with a region 30 mm from an end of the outer peripheral surface of the pipe, and an integrated molded part having a shape illustrated in Fig. 3C was manufactured.

The coefficient of variation in weight of the integrated molded parts obtained (n = 5) was 1.0%, which was equivalent to that in Example 1. In addition, the inflow of the injected resin into the pipe was not confirmed from the X-ray transmission image, and deformation of the pipe and the resin block was not confirmed as well. On the other hand, as a result of performing a drop test in which these pipes were dropped from a height of 1.5 m such that the joint was positioned downward, and thereafter, the joint state between the pipe and the joint was checked, cracks were found between the aluminum block and the joint in two of the five samples. However, no crack was found in the joint portion between the pipe and the joint.

(Example 4)

"TORAYCA Prepreg" P3051S-30 and P3052S-12 manufactured by Toray Industries, Inc. were used and laminated with the fiber-reinforced resin P3051S-30 arranged at a material angle of 0 degrees and the fiber-reinforced resin P3052S-12 arranged at a material angle of 60 degrees. Further, around the laminate, one layer of a 70 $\mu$m-thick polyamide film obtained by hot-pressing pellets of a copolymer polyamide resin (CM4000 manufactured by Toray Industries, Inc., polyamide 6/66/610, melting point: 150°C) was laminated, and the resulting laminate was heat-molded for 30 minutes at mold temperature 150°C and a molding pressure of 0.5 MPa. After demolding, the product was cut and a flat plate (structural member (a)) having a thickness of 1.5 mm, a length of 300 mm, and a width of 25 mm was obtained. Next, a resin block (protective member (c)) with a thickness of 3.5 mm, a length of 82 mm, and a width of 27 mm obtained by injection molding polyamide 66 resin (Amilan CM3001N manufactured by Toray Industries, Inc.) pellets and having one end opened and a hollow portion with a thickness of 1.5 mm, a length of 80 mm, and a width of 25 mm inside was mated to one end of the flat plate. Thereafter, the outer periphery of the flat plate was clamped by a jig provided outside the injection molding mold, followed by adjustment to a desired position in the cavity, and then the flat plate was inserted into the injection molding mold. Using an injection molding machine (J 350EIII manufactured by The Japan Steel Works, Ltd.) set at a cylinder temperature of 280°C and a mold temperature of 80°C, long fiber pellets (TLP1060) manufactured by Toray Industries, Inc. were injection molded, whereby a joint (resin structural member (b) was formed in a region 80 mm from an end surface of the flat plate on which the resin block was disposed, and an integrated molded part was manufactured.

The coefficient of variation in weight of the integrated molded parts obtained (n = 5) was equivalent to that in Example 1, and deformation of the flat plate was not confirmed. On the other hand, as a result of dropping these integrated molded bodies from a height of 1.5 m such that the joint was positioned downward, no crack was found in the joint portion between the flat plate and the joint.

(Comparative Example 1)

A pipe (structural member (a)) was obtained in the same manner as in Example 1. Subsequently, the outer periphery of the pipe was clamped by a jig provided outside the injection molding mold, the pipe opening section surface was adjusted to a desired position in the cavity, and then the pipe was inserted into the injection molding mold. Using an injection molding machine (J 350EIII manufactured by The Japan Steel Works, Ltd.) set at a cylinder temperature of 280°C and a mold temperature of 80°C, long fiber pellets (TLP1060) manufactured by Toray Industries, Inc. were injection molded, whereby a pedestal (resin structural member (b)) having a shape illustrated in Fig. 2A was formed such that the inner surface of the pedestal was in contact with a region 30 mm from an end of the outer peripheral surface of the pipe, and an integrated molded part having a shape illustrated in Fig. 3C was manufactured.

For all of the integrated molded parts obtained (n = 5), the injected resin flowed into the pipe (structural member (a)), and a joint (resin structural member (b)) could not be molded. It was determined to be unnecessary to evaluate the coefficient of variation in weight, and it was confirmed from the X-ray transmission image that the injected resin was deposited inside the pipe. In addition, since a joint could not be joined to a region of 30 mm from the outer peripheral surface of the pipe, the drop test could not be evaluated.

(Comparative Example 2)

A flat plate (structural member (a)) having a thickness of 1.5 mm, a length of 300 mm, and a width of 25 mm was obtained in the same manner as in Example 4. Subsequently, the outer periphery of the flat plate was clamped by a jig provided outside the injection molding mold, followed by adjustment to a desired position in the cavity, and then the flat plate was inserted into the injection molding mold. Using an injection molding machine (J 350EIII manufactured by The Japan Steel Works, Ltd.) set at a cylinder temperature of 280°C and a mold temperature of 80°C, long fiber pellets (TLP1060) manufactured by Toray Industries, Inc. were injection molded, whereby a joint (resin structural member (b) was formed in a region 80 mm from an end surface of the flat plate on which the resin block was disposed, and an integrated molded part was manufactured.

For all of the integrated molded parts obtained (n = 5), a resin flow was formed as a burr at the integrally molded end portion, and it was determined to be unnecessary to evaluate the coefficient of variation in weight. From the X-ray transmission image, it was confirmed that the flat plate (structural member (a)) was deformed due to the inflow of the injected resin, and it was considered that this deformation caused a gap with the mold, leading to generation of burrs.

(Summary)

In Example 1, the coefficient of variation of the weights of the integrated molded parts was small and stable. This is considered to be because in Example 1, joining was performed without an extra resin flowing into the inner bore of the hollow columnar section. On the other hand, in Comparative Example 1, in which a protective member was not disposed, the injected resin flowed in from the pipe opening section, and a desired integrated molded body could not be obtained.

Furthermore, in Example 1, the internal structure after molding was good as compared with Example 2. This is because, in Example 2, the protective member faces the opening section but is not mated to the hollow columnar section, so that the bending of the protective member and the deformation of the pipe due to the injection pressure during the insert molding occurred. Since the injected resin was filled in the bent portion and the deformed portion, the coefficient of variation of the weights of the integrated molded parts was considered to be inferior to that in Example 1.

In Example 1, the joint strength of the integrated molded parts was high as compared with Example 3. It is considered to be because in Example 3, the affinity between the resin structural member and the aluminum alloy used for the protective member was low, so that peeling easily occurred between the resin structural member and the protective member during the drop test.

The integrated molded body with a flat plate of Example 4 was an integrated molded part in which generation of burrs was well suppressed and which was superior in appearance as compared with Comparative Example 2. This is considered to be because in Comparative Example 2, the flat plate was deformed by the heat of the injected resin, a gap was formed in the contact portion between the mold and the flat plate, and the injected resin flowed.

INDUSTRIAL APPLICABILITY

The integrated molded part of the present invention can be suitably used as a member forming a frame structure. Examples of such a structure include a body and an arm of an industrial robot, bodies and arms of an automobile, a motorcycle, a bicycle, an aircraft, a helicopter, a drone, a ship, and a submersible, and a building structure.

DESCRIPTION OF REFERENCE SIGNS

1: Structural member (a)
2: Resin structural member (b)
3: Protective member (c)
L1: Mating length
L2: Joint length
4: Internal space in hollow columnar section of structural member (a)
5: Boundary
Lc: Distance between boundary and end of structural member (a)
Tc: Thickness of protective member (c) in direction perpendicular to outer wall or inner wall where structural member (a) and protective member (c) are in contact

**Claims**

1. An integrated molded part comprising a structural member (a), a resin structural member (b), and a protective member (c), wherein

   the protective member (c) is in contact with both the structural member (a) and the resin structural member (b), and
   a softening temperature Tb (°C) of the resin structural member (b) and a softening temperature Tc (°C) of the protective member (c) satisfy the following relationship.

$$Tc>Tb$$

2. The integrated molded part according to claim 1, wherein a glass transition temperature Ta (°C) of the structural member (a) and the softening temperature Tc (°C) of the protective member (c) satisfy the following relationship.

$$Tc>Ta$$

3. The integrated molded part according to claim 2, wherein a glass transition temperature Ta (°C) of the structural member (a), a softening temperature Tb (°C) of the resin structural member (b), and a softening temperature Tc (°C) of the protective member (c) satisfy the following relationship.

$$10<Tc-Ta<180$$

$$5<Tc-Tb<80$$

4. The integrated molded part according to claim 1, wherein the structural member (a) is a structural member having an internal space, and the structural member (a) and the resin structural member (b) are joined in contact with each other at least at a part thereof.

5. The integrated molded part according to claim 1, wherein the structural member (a) is a structural member having an open internal space, and the protective member (c) covers at least a part of an opening section of the structural member (a).

6. The integrated molded part according to claim 1, wherein the structural member (a) is a structural member having an open hollow columnar section, and the hollow columnar section of the structural member (a) and the resin structural member (b) are joined in contact with each other on at least a part of an outer wall or an inner wall of the hollow columnar section.

7. The integrated molded part according to claim 6, wherein the hollow columnar section of the structural member (a) and the resin structural member (b) are joined on at least a part of an outer wall or an inner wall of the hollow columnar section with a thermoplastic resin interposed therebetween.

8. The integrated molded part according to claim 6, wherein

the structural member (a) is essentially made of a carbon fiber-reinforced thermosetting resin,
a thermoplastic resin layer is disposed on at least a part of an outer wall or an inner wall of the structural member (a), the resin structural member (b) is an injection molded article, the structural member (a) and the resin structural member (b) are joined with the thermoplastic resin layer of the structural member (a) interposed therebetween, and at least a part of an opening section of the structural member (a) is covered with a protective member (c).

9. The integrated molded part according to claim 8, wherein the resin structural member (b) is made of a carbon fiber-reinforced thermoplastic resin, and the protective member (c) is made of a material having a linear expansion coefficient larger than a linear expansion coefficient of a material constituting the structural member (a).

10. The integrated molded part according to claim 8, wherein the resin structural member (b) is made of a carbon fiber-reinforced thermoplastic resin, and the protective member (c) is made of a carbon fiber-reinforced thermoplastic resin or a metal.

11. The integrated molded part according to claim 8, wherein the resin structural member (b) is made of a carbon fiber-reinforced thermoplastic resin, the protective member (c) is made of a carbon fiber-reinforced thermoplastic resin having a softening temperature (°C) higher than a melting point (°C) of the resin structural member (b), and the protective member (c) is present between an internal space of the structural member (a) and the resin structural member (b).

12. The integrated molded part according to claim 6, wherein at least a part of the protective member (c) has a size equal to or larger than an inner diameter of the hollow columnar section of the structural member (a).

13. The integrated molded part according to claim 6, wherein a distance between a boundary between an internal space of the hollow columnar section of the structural member (a) and the protective member (c) and an end of the structural member (a) is 0 to 50 mm.

14. The integrated molded part according to claim 1, wherein a thickness of the protective member (c) is 0.4 to 10 mm.

15. The integrated molded part according to claim 6, wherein a blockage ratio by the protective member (c) to an opening section area of the structural member (a) is 40 to 100%.

16. The integrated molded part according to claim 6, wherein an area (L1) of a region where the structural member (a) and the protective member (c) are in contact with each other is 50 to 200% of a joint area (L2) between the structural member (a) and the resin structural member (b).

17. The integrated molded part according to claim 1, wherein the protective member (c) is essentially made of a thermoplastic resin, and a difference in Hansen solubility parameter (HSP value) between the resin structural member (b) and the protective member (c) is 0 to 2 $(J/cm^3)^{1/2}$.

18. The integrated molded part according to claim 6, wherein the structural member (a) is a pipe, and the resin structural member (b) is a joint or a pedestal.

19. A frame structure comprising the integrated molded part according to claim 18.

20. An aerial vehicle comprising the integrated molded part according to claim 18.

21. The aerial vehicle according to claim 20, wherein the structural member (a) has a length of 0.05 m or more and 3 m or less.

22. The aerial vehicle according to claim 20, wherein the aerial vehicle has a body weight of 1000 kg or less.

23. The aerial vehicle according to claim 20, which is a multirotor type equipped with three or more rotor blades.

24. A method for manufacturing an integrated molded part, the method comprising joining a resin structural member (b) to a structural member (a) including a hollow columnar section, the hollow columnar section having an open section at at least one end and essentially made of a fiber-reinforced resin, such that the resin structural member (b) is in contact with at least a part of an outer wall or an inner wall of the hollow columnar section of the structural member (a), in a state where a protective member (c) covering the opening section of the hollow columnar section is disposed.

25. The method for manufacturing an integrated molded part according to claim 24, wherein the structural member (a) is fixed to a cavity of an injection mold, a molten thermoplastic resin is caused to flow in contact with at least a part of an outer wall or an inner wall of the hollow columnar section of the structural member (a) in a state where a protective member (c) that covers the opening section of the hollow columnar section is disposed, and the thermoplastic resin is solidified under application of retained pressure to injection mold the resin structural member (b), and simultaneously join the resin structural member (b) to the hollow columnar section of the structural member (a).

A          B          C

Figure 1

A          B          C

Figure 2

A          B

C          D          E

Figure 3

Figure 4

Figure 5

## INTERNATIONAL SEARCH REPORT

| International application No. |
|---|
| **PCT/JP2024/001416** |

| A. | CLASSIFICATION OF SUBJECT MATTER |
|---|---|

***B29C 45/14***(2006.01)i; ***B29C 70/12***(2006.01)i; ***B29C 70/16***(2006.01)i
FI:  B29C45/14; B29C70/16; B29C70/12

According to International Patent Classification (IPC) or to both national classification and IPC

| B. | FIELDS SEARCHED |
|---|---|

Minimum documentation searched (classification system followed by classification symbols)

B29C45/00-45/84; B29C70/00-70/88; B29C65/00-65/82; F16L33/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2021-91151 A (SANKO GOSEI LTD.) 17 June 2021 (2021-06-17) | 1-2, 4, 6-7, 12-14, 16, 18-19, 24-25 |
| | claims, paragraphs [0015]-[0022], fig. 3, 4 | |
| Y | | 8-10, 20-23 |
| A | | 3, 5, 11, 15, 17 |
| X | JP 2017-535457 A (SOLVAY SPECIALTY POLYMERS USA, LLC) 30 November 2017 (2017-11-30) | 1-2, 4, 6-7, 13, 16, 18-19 |
| | claims, paragraphs [0007]-[0033], fig. 1-3 | |
| A | claims, paragraphs [0027]-[0053], fig. 1-3 | 3, 5, 8-12, 14-15, 17, 20-25 |
| X | US 2021/0031021 A1 (SYNECCO LIMITED) 04 February 2021 (2021-02-04) | 1, 4-7, 12-13, 15-18, 24-25 |
| | claims, paragraphs [0052]-[0078], fig. 1-8 | |
| A | | 2-3, 8-11, 14, 19-23 |

[✓] Further documents are listed in the continuation of Box C.    [✓] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**EP 4 659 932 A1**

## INTERNATIONAL SEARCH REPORT

<table>
<tr><td colspan="2"></td><td>International application No.<br><br>**PCT/JP2024/001416**</td></tr>
</table>

### C. DOCUMENTS CONSIDERED TO BE RELEVANT

| Category* | Citation of document, with indication, where appropriate, of the relevant passages | Relevant to claim No. |
|---|---|---|
| Y | JP 2007-168231 A (TOHO TENAX CO., LTD.) 05 July 2007 (2007-07-05)<br>paragraph [0002] | 8-10 |
| Y | WO 2019/163578 A1 (MONJU KOGAKU IGAKU KENKYUSHO K.K.) 29 August 2019 (2019-08-29)<br>paragraph [0002] | 20-23 |
| A | US 8277714 B1 (BLUE WILLIAM) 02 October 2012 (2012-10-02)<br>entire text | 1-25 |
| P, A | WO 2023/182158 A1 (TORAY INDUSTRIES, INC.) 28 September 2023 (2023-09-28)<br>entire text | 1-25 |

Form PCT/ISA/210 (second sheet) (July 2022)

## INTERNATIONAL SEARCH REPORT
### Information on patent family members

International application No.

**PCT/JP2024/001416**

| Patent document cited in search report | | | Publication date (day/month/year) | Patent family member(s) | Publication date (day/month/year) |
|---|---|---|---|---|---|
| JP | 2021-91151 | A | 17 June 2021 | (Family: none) | |
| JP | 2017-535457 | A | 30 November 2017 | US 2017/0334111 A1 claims | |
| US | 2021/0031021 | A1 | 04 February 2021 | (Family: none) | |
| JP | 2007-168231 | A | 05 July 2007 | (Family: none) | |
| WO | 2019/163578 | A1 | 29 August 2019 | (Family: none) | |
| US | 8277714 | B1 | 02 October 2012 | (Family: none) | |
| WO | 2023/182158 | A1 | 28 September 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S62295372 A

- JP 2020101288 A